# EUROPÄISCHE PATENTSCHRIFT

(11) **EP 1 340 019 B1**
(45) Veröffentlichungstag und Bekanntmachung des Hinweises auf die Patenterteilung: **01.03.2006**
(21) Anmeldenummer: 01975942.2
(22) Anmeldetag: 24.10.2001
(51) Int. Cl.: F23G 5/50

(54) **VERFAHREN ZUM BETREIBEN EINER MÜLLVERBRENNUNGSANLAGE**
METHOD FOR OPERATING A REFUSE INCINERATION PLANT
PROCEDE PERMETTANT DE FAIRE FONCTIONNER UNE INSTALLATION D'INCINERATION D'ORDURES MENAGERES

(30) Priorität: 08.12.2000 CH 239800
(43) Veröffentlichungstag der Anmeldung: 03.09.2003
(73) Patentinhaber: Von Roll Umwelttechnik AG, 8037 Zürich (CH)
(72) Erfinder: SCHIRMER, Alfons, CH-8046 Zürich (CH); MERCX, Josef, CH-5401 Baden (CH)
(74) Vertreter: Schaad, Balass, Menzl & Partner AG
(86) Internationale Anmeldenummer: PCT/CH2001/000630
(87) Internationale Veröffentlichungsnummer: WO 2002/046661

(56) Entgegenhaltungen:
- EP-A- 0 499 976
- EP-A- 0 766 042
- EP-A- 1 046 861
- EP-A- 1 048 900
- US-A- 6 022 387

## Beschreibung

Die Erfindung betrifft ein Verfahren zum Betreiben einer Müllverbrennungsanlage nach dem Oberbegriff von Anspruch 1, ein Regelsystem zur Regelung von wenigstens einem der Betriebsparameter einer Müllverbrennungsanlage nach Anspruch 10 und eine Müllverbrennungsanlage mit einem solchen Regelsystem.

Der Betrieb und insbesondere die gleichmässige Wärmeerzeugung in mit Öl oder Kohle betriebenen Kraftwerken ist unproblematisch. Sie wird über die gleichmässige Dosierung der Brennnstoffmenge erzielt, deren Qualität konstant und bekannt ist. Auch bei Müllverbrennungsanlagen ist das Hauptziel, die Wärmeleistung konstant zu halten. Daneben muss das Rauchgas bezüglich Qualität und Menge bestimmte gesetzliche Vorgaben erfüllen. Über die Dosierung des zugeführten Mülls allein lässt sich die Wärmeleistung nicht kontrollieren, da der Heizwert des Mülls, bedingt durch seine unterschiedliche Zusammensetzung und den variierenden Wassergehalt, stark schwanken kann. Entsprechend ist bereits die Konstanthaltung der Wärmemenge schwierig. Noch problematischer ist die zusätzliche Optimierung der übrigen Parameter.

Aus der EP-B-0 499 976 ist ein Verfahren zum Betreiben einer Müllverbrennungsanlage bekannt, bei dem zur Vergleichmässigung der erzeugten Wärmemenge die Müllzufuhr, d.h. die Bewegung des Dosierstössels, der Mülltransport auf dem Rost, d.h. Bewegung bzw. Hubfrequenz der Rostteile, und die Primärluftzufuhr mittels einer Kaskadenregelung geregelt wird. Die erzeugte Dampfmenge wird mit etwas Verzögerung erfasst und dient als Hauptregelgrösse. Als Hilfsregelgrösse wird der schnell verfügbare Wert des Sauerstoffgehalts des Rauchgases verwendet. Mit dieser Feuerleistungsregelung kann die Müllverbrennungsanlage weitgehend automatisch an geringfügig wechselnde Mülleigenschaften und damit an geringfügige Heizwertschwankungen angepasst werden. Allerdings werden Rostfrequenz, Stösselbewegung und Primärluftzufuhr immer im gleichen Sinne erhöht bzw. erniedigt. Stärkere Änderungen in der Müllbeschaffenheit bzw. des Heizwertes, die eine Änderung der Betriebsparameter im gegenläufigen Sinn erfordern, werden von dieser Feuerleistungsregelung daher unzureichend ausgeglichen. Dies ist beispielsweise der Fall beim Übergang auf nassen, stark verdichteten Müll, wo die Stösselgeschwindigkeit zur Verminderung der Müllzufuhr abgesenkt und die Rostfrequenz zum Vereinzeln bzw. Auseinanderreissen des Mülls erhöht werden sollte. Beim bekannten Verfahren wird die Heizwertschwankung dann zwar kurzfristig durch Anfachen oder Bremsen der Feuerintensität und längerfristig durch die zudosierte Müllmenge ausgeglichen. Auf den richtigen Verbrennungsverlauf über die Rostlänge wird bei der automatischen Feuerleistungsregelung jedoch keine Rücksicht genommen.

In der Praxis werden solche Änderungen des Heizwerts üblicherweise von einer Bedienperson ausgeglichen, indem die Beschaffenheit des Mülls oder die Feuerlage anhand des Augenscheins beurteilt wird. Die Bedienperson stellt dann einzelne Betriebsparameter von Hand nach, z.B. wird bei nassem Müll häufig die Primärluftvorwärmung erhöht. Unbefriedigend dabei ist, dass die Einstellung der Betriebsparameter aufgrund der vielfältigen Eingriffsmöglichkeiten und Wechselwirkungen kompliziert ist und nicht immer optimal gewählt wird. Sie hängt des weiteren in beträchtlichem Masse von der Erfahrung der Bedienperson ab. Die Regelstrecke hat eine extrem lange Verzugszeit, so dass die vollständige Auswirkung eines Eingriffs erst nach etwa einer Stunde beurteilt werden kann. Dokument EP-A-1 046 861 offenbart ein Verfahren zur Automatischen Einstellung einen Müllverbrennungsanlage beidem die Müllqualität verwendet wird.

Der Erfindung liegt daher die Aufgabe zugrunde, die Bedienung einer Müllverbrennungsanlage zu vereinfachen, insbesondere ein Verfahren zur Bedienung einer Müllverbrennungsanlage anzugeben, bei dem die Anpassung der Betriebsparameter an wechselnde Mülleigenschaften, insbesondere Heizwertschwankungen, weitgehend automatisch erfolgt.

Die Aufgabe wird gelöst durch ein Verfahren zur Bedienung einer Müllverbrennungsanlage mit den Merkmalen des Anspruchs 1. Die Aufgabe wird weiterhin gelöst durch ein Regelsystem mit den Merkmalen von Anspruch 10 und eine Müllverbrennungsanlage mit einem solchen Regelsystem mit den Merkmalen von Anspruch 15.

Vorteilhafte Weiterbildungen der Erfindung ergeben sich aus den abhängigen Ansprüchen, der Beschreibung und den Zeichnungen.

Zum Betreiben einer Müllverbrennungsanlage wird nach dem Anfachen des Feuers die Wärmeerzeugung durch Regelung von mehreren Betriebsparametern, darunter wenigstens einer der Betriebsparameter Müllzudosierung, Verweilzeit auf einem Rost und Primärluftmengenzufuhr, in Abhängigkeit von mehreren Messgrössen, darunter wenigstens eine der Messgrössen Sauerstoffgehalt im Rauchgas und erzeugte Dampfmenge, in an sich bekannter Weise vergleichmässigt (Feuerleistungsregelung). Beispielsweise wird das aus der EP-B 0 499 976 bekannte Verfahren angewendet. Erfindungsgemäss wird aus einer Messgrösse ein Heizwert-Parameter abgeleitet, der ein Mass für den Heizwert des zudosierten Mülls oder für dessen Änderung ist. Wenigstens einer der Betriebsparameter wird unter Abwandlung der bekannten Regeltechniken wenigstens auch in Abhängigkeit vom Heizwert-Parameter eingestellt.

Der Heizwert bzw. dessen Änderung wird automatisch durch die Analyse geeigneter Messgrössen erfasst. Nach einem vorbestimmten, z.B. empirisch ermittelten oder in Modellrechnungen erstellten, Schema wird mit dem Heizwert-Parameter die Regelung wenigstens eines Betriebsparameters beeinflusst. Im Idealfall ist damit keinerlei Handeingriff erforderlich, der Eingriff erfolgt automatisch nach objektiven Kriterien, und die Anlage kann im Prinzip sich selbst überlassen werden.

Zusätzlich kann auch die Möglichkeit eines Handeingriffs vorgesehen sein. Der Heizwert bzw. dessen Änderung wird dazu von einer Bedienperson abgeschätzt, z.B. durch Beobachtung der Feuerlage. Von Hand wird über die Prozesssteuerung als Heizwert-Parameter eine Grösse eingegeben, die beispielsweise angibt, wie weit der geschätzte Heizwert vom bei der Dimensionierung der Feuerung angenommenen Nominalheizwert abweicht.

Die Messgrösse für den Heizwert-Parameter wird automatisch erfasst. In einer vorteilhaften Weiterbildung des Verfahrens wird als Mass für den Heizwert die Feuchte des Rauchgases verwendet. Dem liegt zugrunde, dass der Heizwert des Mülls wesentlich durch seinen Wassergehalt bestimmt ist. Da das im Müll enthaltene Wasser nach dessen Zuführung in den Ofen sofort zu verdampfen beginnt, gibt die gemessene Feuchte ohne grosse zeitliche Verzögerung Änderungen in der Müllzusammensetzung wieder. Ein entsprechendes Signal steht dann unmittelbar zur Anpassung der Betriebsparameter bzw. deren Regelung an den veränderten Heizwert zur Verfügung. Die Feuchte des Rauchgases kann direkt mittels eines Feuchtesensors gemessen werden. Vorzugsweise aber wird das Rauchgas mit Wasser gesättigt und die leicht messbare Temperatur des gesättigten Rauchgases als Mass für die Feuchte und damit für den Heizwert verwendet. Der Wärmeentzug durch Verdampfung ist grösser, wenn bereits von Anfang an weniger Wasser im Rauchgas enthalten war. Die Temperatur des mit Wasser angereicherten Rauchgases ist daher ein Mass für den ursprünglichen Wassergehalt des Mülls und damit für den Heizwert. Da in vielen Müllverbrennungsanlagen eine Wassereindüsung und ein Wäscher vorhanden sind, lässt sich diese Variante besonders leicht realisieren. Die Temperatur wird vorzugsweise nach der Wassereindüsung, im Sumpf des Wäschers oder am Wäscherausgang gemessen.

Aus dem Heizwert-Parameter wird automatisch wenigstens eine Korrekturgrösse bestimmt, das wenigstens einen der Stellwerte aus der Feuerleistungsregelung und/oder eine der zur Feuerleistungsregelung verwendeten Grössen, z.B. Eingangsgrössen oder Verstärkungen beteiligter Regler, modifiziert. Vorzugsweise werden eine Mehrzahl von Betriebsparametern derart beeinflusst, so dass durch einen Eingriff bzw. aufgrund des automatisch erfassten Heizwertes das Kennfeld der gesamten Anlage verschoben und optimal an den veränderten Heizwert angepasst werden kann. Korrekturgrössen werden beispielsweise anhand von Modellrechnungen ermittelt oder beruhen auf empirischen Werten.

Durch die Korrekturgrösse wird beispielsweise der Stellbereich bzw. Arbeitspunkt eines einzelnen Reglers verschoben, während die Leistungsregelung ansonsten die Wärmeleistung in bekannter Weise konstant hält.

In einer weiteren vorteilhaften Weiterbildung der Erfindung wird mit der aus dem Heizwert-Parameter ermittelten Korrekturgrösse die Reglerverstärkung wenigstens eines Reglers modifiziert. Damit wird der Arbeitsbereich dieses Reglers an den veränderten Heizwert angepasst. Daneben kann mit entsprechenden aus desselben Heizwert-Parameters ermittelten Korrekturgrössen auch der Stellwert und/oder Sollwert dieses Reglers oder anderer Regler angepasst werden.

Vorzugsweise werden die folgenden Betriebsparameter in Abhängigkeit vom Heizwert-Parameter eingestellt: Summe aus Primärluft und Sekundärluft, Verhältnis Primärluft zu Sekundärluft, Zonenklappenstellung, Primärluft, Müllzudosierung, Verweilzeit auf dem Rost, Sauerstoff-Sollwert, Primärluftvorwärmung.

Das erfindungsgemässe Regelsystem zur Regelung von wenigstens einem der Betriebsparameter einer Müllverbrennungsanlage weist wenigstens einen Regler auf, der aufgrund von wenigstens einer als Eingangssignal zugeführten Regelgrösse und/oder wenigstens einem Sollwert ein Ausgangssignal erzeugt, das als Stellwert einem der Stellglieder Stössel, Rost, Primärluftklappen oder Primärluftvorwärmer zugeführt wird. Erfindungsgemäss ist eine erste Messeinrichtung zur Erfassung einer Messgrösse vorhanden, aus der ein Heizwert-Parameter abgeleitet wird, der ein Mass für den Heizwert des Mülls oder für dessen Änderung ist. Des weiteren ist eine Heizwert-Korrektureinheit vorhanden, die anhand des Heizwert-Parameters wenigstens eine Korrekturgrösse erzeugt, mit der wenigstens ein Sollwert und/oder Stellwert und/oder eine Reglerverstärkung des wenigstens einen Reglers modifiziert wird.

Das Regelsystem dient insbesondere zur Durchführung des erfindungsgemässen Verfahrens.

Eine Müllverbrennungsanlage mit einem solchen Regelsystem weist alle Vorteile des Regelsystems auf.

Ausführungsbeispiele der Erfindung sind in den Figuren dargestellt und nachfolgend beschrieben. Dabei zeigen schematisch:
- Fig. 1: ein Fliessschema einer Müllverbrennungsanlage;
- Fig. 2: ein Beispiel für eine erfindungsgemässe Regelung;
- Fig. 3a: Beispiele für Kennlinien eines Folgereglers für den Rost bei verschiedenen Heizwerten;
- Fig. 3b: Beispiele für Kennlinien eines Folgereglers für die Luftzufuhr bei verschiedenen Heizwerten;
- Fig. 4: ein Beispiel für eine Reglerschaltung für die Folgeregler.

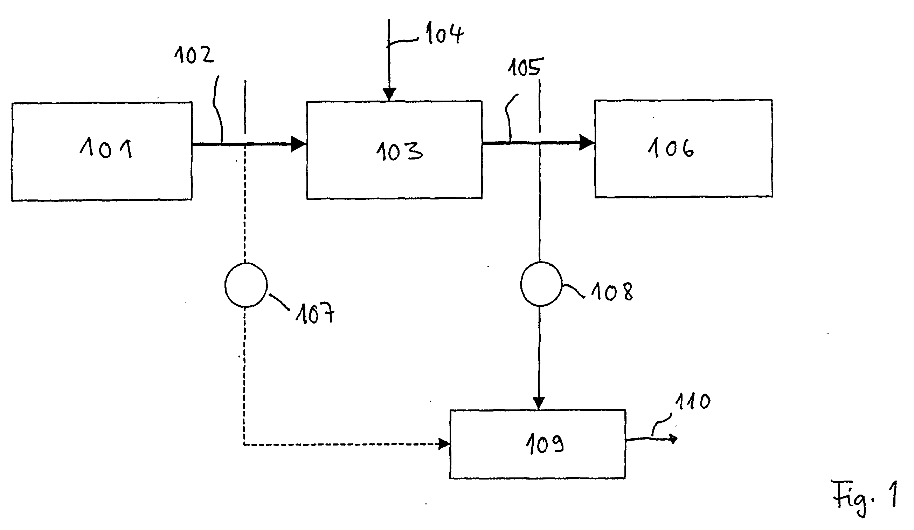

Fig. 1 zeigt ein Fliessschema einer Müllverbrennungsanlage. Dem Feuerraum 101 wird mittels eines hier nicht dargestellten Stössels Müll zugeführt. Der zudosierte Müll gelangt auf einen hier nicht dargestellten angetriebenen Verbrennungsrost, wo er getrocknet, entgast und verbrannt wird. Der Verbrennungsablauf wird durch die Zuführung von Primärluft, Sekundärluft und die Rostbewegung beeinflusst. Die heissen Rauchgase 102 gelangen aus dem Feuerraum 101 in einen hier nicht dargestellten Kessel, wo sie zur Dampferzeugung verwendet werden. Das Rauchgas passiert anschliessend eine Wassereindüsung bzw. Quencheinrichtung 103, in der das Rauchgas 102 mit Wasser 104 gesättigt wird. Das gesättigte Rauchgas 105 wird anschliessend der Rauchgasreinigung 106 zugeführt.

Eine Temperatur-Messeinrichtung 108 misst die Temperatur des mit Wasser gesättigten Rauchgases 105. Der Messwert wird einer Verarbeitungseinheit 109 zugeführt, die einen Heizwert-Parameter 110 generiert. Die Verarbeitungseinheit 109 umfasst beispielsweise einen PI-Regler. Beispielsweise wird die Abweichung der momentanen Temperatur vom gleitenden Temperatur-Mittelwert als Mass für den Heizwert oder die Heizwertabweichung genommen. Die zur Regelung verwendete Temperatur des Rauchgases kann nach der Quencheinrichutng 103, im Sumpf des Wäschers 106 oder im Bereich des Ausgangs des Wäschers gemessen werden.

Zur Bestimmung des Heizwert-Parameters 110 kann auch die Feuchte des ungesättigten Rauchgases 102 mit einer Feuchte-Messeinrichtung 107 gemessen und in der Verarbeitungseinheit 109 ausgewertet werden. Dieses bietet sich insbesondere bei Anlagen ohne Quencheinrichtung 103 an.

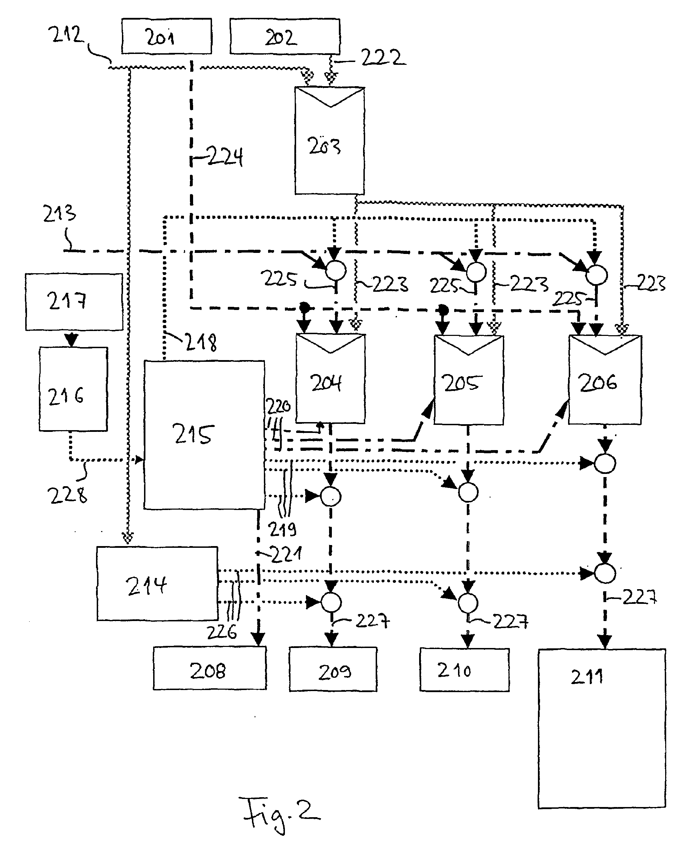

Das in Fig. 2 gezeigte Regelsystem weist in an sich bekannter Weise Messeinrichtungen 201, 202 für den Sauerstoffgehalt des Rauchgases und die Dampfmenge auf. Geregelt werden die Betriebsparameter Müllzudosierung durch Beeinflussung des Stellglieds "Stössel" 209, Verweilzeit auf dem Rost durch Beeinflussung des Stellglieds "Rost" 210, Primärluftvorwärmung durch Beeinflussung des entsprechenden Stellglieds 208 und weitere Parameter der Primär- und Sekundärluftzufuhr und - verteilung durch Beeinflussung der Funktionseinheit "Luft" 211, die weitere Regler enthalten kann. Mit der Funktionseinheit "Luft" 211 werden beispielsweise hier nicht dargestellte Stellglieder für die Gesamtluftmenge, Primärluftmenge, Sekundärluftmenge, Luftzufuhr zu den einzelnen Rostzonen beeinflusst.

Der gemessene Wert für die Dampfmenge 222 wird als Eingangssignal einem Haupt- oder Führungsregler 203 zugeführt. Dieser ist vorzugsweise ein langsam arbeitender PI-Regler. Sein Ausgangssignal 223 wird drei nachgeschalteten Hilfs- oder Folgereglern 204, 205, 206 zugeführt, die vorzugsweise schnell arbeitende P-Regler sind. Der Sollwert der Hilfsregler 204, 205, 206 wird durch das Ausgangssignal 223 des Hauptreglers 203 aufgrund der gemessenen Dampfwerte verstellt. Den Hilfsreglern 204, 205, 206 wird als weiteres Eingangssignal der Messwert für den Sauerstoffgehalt 224 zugeführt. Als drittes Eingangssignal für alle drei Hilfsregler 204, 205, 206 dient der vorgegebene Sollwert für den Sauerstoffgehalt 213. Die Ausgänge der Hilfsregler 204, 205, 206 sind mit den Stellgliedern Stössel, Rost und Luft 209, 210, 211 verbunden.

Durch eine Steuereinheit 214 wird aufgrund eines vorgegebenen Dampfsollwerts 212 die Grundeinstellung der Stellglieder 209, 210, 211 bestimmt. Entsprechende Signale 226 werden als Grund-Stellwerte den Stellgliedern 209, 210, 211 zugeführt. Diese Grund-Stellwerte werden modifiziert durch die Ausgangssignale der Hilfsregler 204, 205, 206, die z.B. zu den Grund-Stellwerten 226 addiert werden.

Erfindungsgemäss wird das bisher beschriebene, an sich bekannte Regelsystem durch eine Möglichkeit zur automatischen Anpassung der Regelung an wechselnde Heizwerte erweitert. Dazu ist eine Messeinrichtung 217 für eine Messgrösse, aus dem ein Mass für den Heizwert oder dessen Änderung abgeleitet werden kann, z.B. die Temperatur des mit Wasser gesättigten Rauchgases, vorhanden. Aus dieser Messgrösse wird in einer Einheit 216 ein Heizwert-Parameter 228 generiert, der als Eingangsgrösse einer Heizwert-Korrektureinheit 215 zugeführt wird. Diese bestimmt aus dem Heizwert-Parameter mehrere Korrekturgrössen 218, 219, 220, 221, mit denen die Regelung der Betriebsparameter modifiziert wird. Zum einen erzeugt die Heizwert-Korrektureinheit 215 eine Sauerstoffsollwert-Korrekturgrösse 218, mit der der den Hilfsreglern als Eingangsgrösse 225 zugeführte Sauerstoffsollwert 213 an den veränderten Heizwert angepasst wird, z.B. durch Addition der Korrekturgrösse zum Sollwert. Mit Stellwert-Korrekturgrössen 219 wird der den Stellgliedern 209, 210, 211 zugeführte Stellwert 227 modifiziert. Beispielsweise dient als Stellwert 227 die Summe aus dem Ausgangssignal der Hilfsregler 204, 205, 206, dem entsprechenden Grund-Stellwert 226 und der entsprechenden Korrekturgrösse 226. Durch entsprechende Zuweisung von Korrekturgrössen 226 zu den einzelnen Stellgliedern gelingt durch einen einzigen automatisch ablaufenden Eingriff eine optimale Anpassung der Betriebsparameter an den aktuellen Heizwert. Beispielsweise wird beim Übergang auf nassen, stark verdichteten Müll (schlechterer Heizwert) die Stösselgeschwindigkeit gesenkt (negative Korrekturgrösse für Stellglied Stössel 209) und die Rosthubfrequenz erhöht (positive Korrekturgrösse für Stellglied Rost 210).

In einer bevorzugten Weiterbildung der Erfindung erzeugt die Heizwert-Korrektureinheit 215 weitere Korrekturgrössen 220, mit denen die Verstärkung der Hilfsregler 204, 205, 206 modifiziert wird. Beispielsweise wird bei hohen Heizwerten die Verstärkung des Hilfsreglers 205, der das Stellglied Rost 210 regelt, erhöht und die Verstärkung des Hilfsreglers 206, der die Funktionseinheit Luft 211 regelt, erniedrigt. Gleichzeitig werden die Grund-Stellwerte durch Korrekturgrössen 219 angepasst. Dem liegt die Erkenntnis zugrunde, dass unterschiedliche Müllheizwerte für die gleiche Reglerabweichung unterschiedliche Reglerantworten (Verstärkungen) verlangen. Des weiteren ist das Abbrandverhalten des Mülls auf dem Rost heizwertabhängig und erfordert somit Massnahmen, die für jede Müllbeschaffenheit die optimale Rostbelegung sicherstellen (Anpassung der Grund-Stellwerte). Beispielsweise wird die Anlage bei hohen Heizwerten bevorzugt rostbetont gefahren, d.h. mit kurzer Verweilzeit auf dem Rost, und bei niedrigen Heizwerten vorzugsweise luftbetont. Dieses kann durch erfindungsgemässe Modifizierung der Reglerverstärkung realisiert werden.

Die Heizwert-Korrektureinheit 215 erzeugt eine weitere Kontrollgrösse 221, die direkt als Stellwert für das Primärluftvorwärmungs-Stellglied 208 dient.

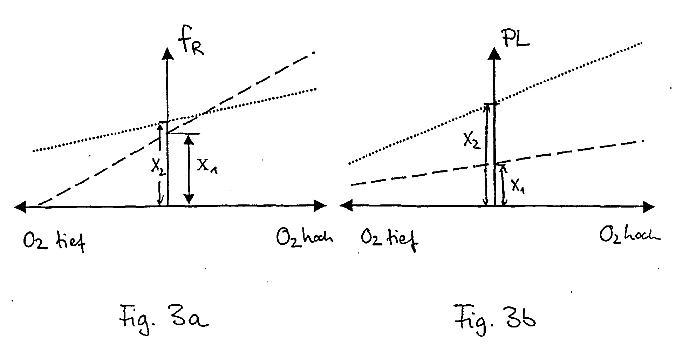

In den Figuren 3a und 3b sind jeweils zwei Beispiele für Kennlinien eines Folgereglers für den Rost bzw. für die Luftzufuhr bzw. die Stellgrössen der entsprechenden Stellglieder bei hohen Heizwerten (gestrichelte Linie) und bei niedrigen Heizwerten (punktierte Linie) dargestellt. In Fig. 3a ist die Rosthubfrequenz f_{R} als Funktion des gemessenen Sauerstoffgehalts bzw. der Regelabweichung des Folgereglers dargestellt. Der Stellwert x1, x2 bei Regelabweichung Null ist durch die Grundgrösse, die durch die Steuereinheit 214 bestimmt und aufgrund des erfassten Heizwerts korrigiert wurde, gegeben. Die Grundeinstellung x1 bei hohem Heizwert ist demnach niedriger als die Grundeinstellung x2 bei niedrigem Heizwert. Die Steigung der Kennlinien ist durch die Reglerverstärkung bestimmt, die bei hohem Heizwert höher ist als bei niedrigem. Im Falle der Primärluftzufuhr PL, deren Regelung in Fig. 3b dargestellt ist, sind Grundeinstellung X1, X2 und Reglerverstärkung bei hohem Heizwert niedriger als bei niedrigem Heizwert.

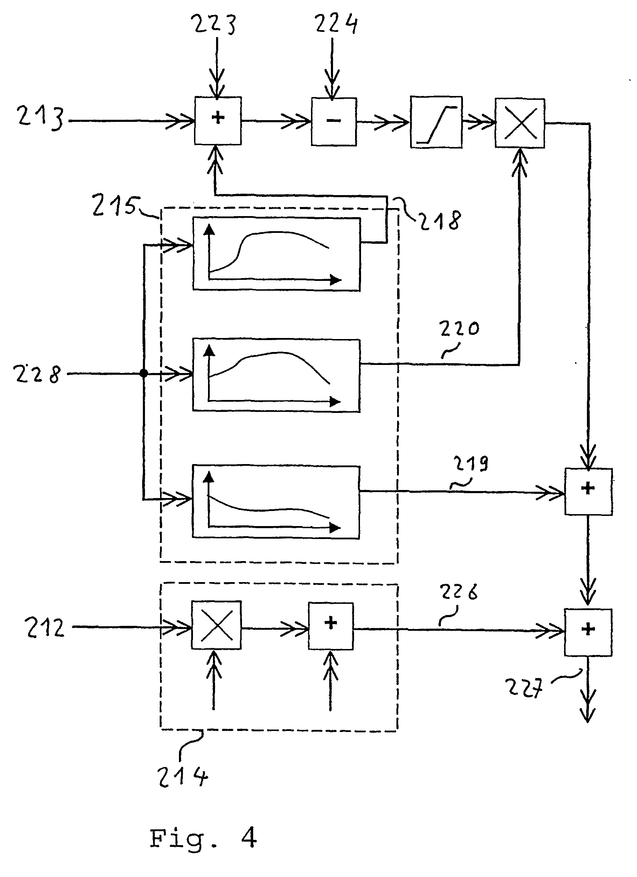

Fig. 4 zeigt ein Beispiel für eine Reglerschaltung für die Folgeregler 205 oder 206 aus Fig. 2. Aus dem Heizwert-Parameter 228 werden in der Heizwert-Korrektureinheit 215 Korrekturgrössen 218, 219, 220 erzeugt. Die Zuordnung erfolgt anhand von vorbestimmten Funktionen, in Fig. 4 durch nichtlineare Kurven in der Einheit 215 symbolisiert. Der Sauerstoff-Sollwert 213 wird mit dem Ausgangssignal 223 vom Dampfregler, das die Sauerstoff-Sollwert-Verschiebung angibt, und der Sollwert-Korrekturgrösse 218 einem Additionsglied zugeführt. Die Differenz zum aktuellen Sauerstoffmesswert 224 wird verstärkt oder abgeschwächt, wobei der Proportionalitätsfaktor durch die Reglerverstärkungs-Korrekturgrösse 220 bestimmt wird. Zu dieser Grösse wird die Grundgrösse 226 für den Stellwert 227 und eine Stellwert-Korrekturgrösse 219 addiert. Die Grundgrösse 226 für den Stellwert 227 wird in der Steuereinheit 214 durch Multiplikation und Addition mit vorbestimmten Grössen aus dem vorgegebenen Dampf-Sollwert 212 generiert. Mit dem so erzeugten Stellwert 227 wird das Stellglied 209 oder 210 angesteuert.

## Patentansprüche

1. Verfahren zum Betreiben einer Müllverbrennungsanlage, bei dem nach dem Anfachen des Feuers die Wärmeerzeugung durch Regelung von einer Mehrzahl von Betriebsparametern, darunter wenigstens einer der Betriebsparameter Müllzudosierung, Verweilzeit auf einem Rost und Primärluftmengenzufuhr, in Abhängigkeit von mehreren Messgrössen, darunter wenigstens eine der Messgrössen Sauerstoffgehalt im Rauchgas (224) und erzeugte Dampfmenge (222), vergleichmässigt wird, **dadurch gekennzeichnet, dass** aus einer weiteren Messgrösse ein Heizwert-Parameter (228) generiert wird, der ein Mass für den Heizwert des Mülls oder für dessen Änderung ist, und wenigstens einer der Betriebsparameter auch in Abhängigkeit vom Heizwert-Parameter (228) eingestellt wird.

2. Verfahren nach Anspruch 1, **dadurch gekennzeichnet, dass** wenigstens zwei, vorzugsweise alle, der folgenden Betriebsparameter in Abhängigkeit vom Heizwert-Parameter (228) eingestellt werden: Summe aus Primärluft und Sekundärluft, Verhältnis Primärluft zu Sekundärluft, Zonenklappenstellung, Primärluftmenge, Müllzudosierung, Verweilzeit auf dem Rost, Sauerstoff-Sollwert, Primärluftvorwärmung.

3. Verfahren nach Anspruch 1 oder 2, **dadurch gekennzeichnet, dass** der Heizwert-Parameter (228) aus der Feuchte des bei der Verbrennung erzeugten Rauchgases (102) bestimmt wird.

4. Verfahren nach Anspruch 1, 2 oder 3, **dadurch gekennzeichnet, dass** der Heizwert-Parameter (228) aus der Temperatur des bei der Verbrennung erzeugten und darauffolgend mit Wasserdampf gesättigten Rauchgases (104) bestimmt wird.

5. Verfahren nach einem der vorangegangenen Ansprüche, **dadurch gekennzeichnet, dass** dem Heizwert-Parameter (228) wenigstens eine Korrekturgrösse (218, 219, 220, 221) zugeordnet ist oder nach einer vorbestimmten Vorschrift zugeordnet wird, mit der wenigstens eine Eingangsgrösse (225) und/oder wenigstens eine Ausgangsgrösse (227) wenigstens eines Reglers (204, 205, 206) modifiziert wird, mit dem der wenigstens eine Betriebsparameter eingestellt bzw. geregelt wird.

6. Verfahren nach Anspruch 5, **dadurch gekennzeichnet, dass** die Summe aus der Ausgangsgrösse eines Reglers (204, 205, 206), einer aufgrund des Heizwert-Parameters (228) generierten Korrekturgrösse (219) und vorzugsweise eines vorbestimmten Grund-Stellwerts (226) zur Einstellung eines Betriebsparameter dient.

7. Verfahren nach Anspruch 5 oder 6, **dadurch gekennzeichnet, dass** mit einer Korrekturgrösse (218) die Eingangsgrösse (225) für einen Regler (204, 205, 206) modifiziert wird.

8. Verfahren nach einem der vorangegangenen Ansprüche, **dadurch gekennzeichnet, dass** dem Heizwert-Parameter (228) wenigstens eine Korrekturgrösse (219) zugeordnet ist oder nach einer vorbestimmten Vorschrift zugeordnet wird, mit der wenigstens die Reglerverstärkung wenigstens eines Reglers (204, 205, 206) modifiziert wird, mit dem der wenigstens eine Betriebsparameter eingestellt bzw. geregelt wird.

9. Verfahren nach einem der vorangegangenen Ansprüche, **dadurch gekennzeichnet, dass** zur Regelung der Betriebsparameter Müllzudosierung, Verweilzeit auf einem Rost, Primärluftmengenzufuhr und Primärluftvorwärmung Stellwerte (227) verwendet werden, die sich aus wenigstens den Messgrössen Sauerstoffgehalt im Rauchgas (224) und erzeugte Dampfmenge (222) ableiten und in Abhängigkeit vom Heizwert-Parameter (228) modifiziert sind.

10. Regelsystem zur Regelung von wenigstens einem der Betriebsparameter einer Müllverbrennungsanlage mit wenigstens einem Regler (203, 204, 205, 206) zur Regelung von wenigstens einem der Stellglieder Stössel (209), Rost (210), Primärluftklappen (211) oder Primärluftmengenvorwärmer (208), **gekennzeichnet durch** eine Messeinrichtung (107, 108, 217) zur Erfassung einer Messgrösse, aus der ein Heizwert-Parameter (228) abgeleitet wird, der ein Mass für den Heizwert des Mülls oder für dessen Änderung ist, und **durch** eine Heizwert-Korrektureinheit (215), die anhand des Heizwert-Parameters (228) wenigstens eine Korrekturgrösse (218, 219, 220, 221) erzeugt, mit der wenigstens eine Eingangsgrösse (225) und/oder eine Ausgangsgrösse (227) und/oder eine Reglerverstärkung des wenigstens einen Reglers (203, 204, 205, 206) modifiziert wird.

11. Regelsystem nach Anspruch 10, **dadurch gekennzeichnet, dass** die Messeinrichtung (107, 108, 217) die Feuchte des Rauchgases (102) oder die Temperatur des mit Wasser gesättigten Rauchgases (104) erfasst.

12. Regelsystem nach Anspruch 10 oder 11, **dadurch gekennzeichnet, dass** die Heizwert-Korrektureinheit (215) eine Schaltung aufweist, mit der dem Heizwert-Parameter (228) mehrere Korrekturgrössen (218, 219, 220, 221) zugeordnet werden, vorzugsweise einen Prozessor, mit dem die Korrekturgrössen (218, 2.19, 220, 221) aus dem Heizwert-Parameter (228) berechnet werden.

13. Regelsystem nach einem der Ansprüche 10 bis 12, **dadurch gekennzeichnet, dass** Messeinrichtungen für die Dampfmenge und für den Sauerstoffgehalt (202; 201) des Rauchgases vorhanden sind.

14. Regelsystem Anspruch 13, **gekennzeichnet durch** eine mehrschleifige Regeleinrichtung mit einem Hauptregler (203), dem eine aus der gemessenen Dampfmenge (222) abgeleitete Hauptregelgrösse zugeführt wird, und mindestens drei dem Hauptregler (203) nachgeschalteten schnelleren Hilfsreglern (204, 205, 206), denen eine aus dem gemessenen Sauerstoffgehalt (224) abgeleitete Hilfsregelgrösse zugeführt wird und deren Ausgänge jeweils mit einem der Stellglieder (209, 210, 211) verbunden sind, wobei mit den Korrekturgrössen (218, 219, 220, 221) eine Eingangsgrösse und/oder eine Ausgangsgrösse und/oder eine Reglerverstärkung von wenigstens einem der Hilfsregler (204, 205, 206) modifiziert wird, vorzugsweise von allen Hilfsreglern (204, 205, 206).

15. Müllverbrennungsanlage mit einem einen Rost aufweisenden Feuerraum, einem Kessel und mit einem Regelsystem nach einem der Ansprüche 10 bis 14.

16. Müllverbrennungsanlage nach Anspruch 15 mit einer Wassereindüsung (103) zur Sättigung des bei der Müllverbrennung erzeugten Rauchgases mit Wasserdampf und mit einer Messeinrichtung (108) für die Temperatur des mit Wasserdampf gesättigten Rauchgases (105), die nach der Wassereindüsung (108) angeordnet ist.

17. Müllverbrennungsanlage nach Anspruch 15 mit einer Messeinrichtung für die Feuchte des Rauchgases.

## Claims

1. A method for operating a refuse incineration plant, in which, after the fire has been fanned, the generation of heat is made more uniform by regulating a plurality of operating parameters, including at least one of the operating parameters refuse metering, residence time on a grate and quantitative supply of primary air, as a function of a plurality of measured variables, including at least one of the measured variables oxygen content in the flue gas (224) and quantity of steam generated (222), **characterized in that** a calorific value parameter (228), which is a measure of the calorific value of the refuse or the change in this value, is generated from a further measured variable, and at least one of the operating parameters is adjusted also as a function of the calorific value parameter (228).

2. The method as claimed in claim 1, **characterized in that** at least two, preferably all, of the following operating parameters are adjusted as a function of the calorific value parameter (228): sum of primary air and secondary air, ratio of primary air to secondary air, zone flap position, quantity of primary air, refuse metering, residence time on the grate, desired oxygen value, primary air preheating.

3. The method as claimed in claim 1 or 2, **characterized in that** the calorific value parameter (228) is determined from the moisture content of the flue gas (102) which is generated during the incineration.

4. The method as claimed in claim 1, 2 or 3, **characterized in that** the calorific value parameter (228) is determined from the temperature of the flue gas (104) which is generated during the incineration and is then saturated with steam.

5. The method as claimed in one of the preceding claims, **characterized in that** at least one correction variable (218, 219, 220, 221) is assigned to the calorific value parameter (228) or is assigned according to a predetermined rule which is used to modify at least one input variable (225) and/or at least one output variable (227) of at least one regulator (204, 205, 206) which is used to adjust or control the at least one operating parameter.

6. The method as claimed in claim 5, **characterized in that** the sum of the output variable of a regulator (204, 205, 206), a correction variable (219) generated on the basis of the calorific value parameter (228) and preferably a predetermined basic setting value (226) is used to adjust an operating parameter.

7. The method as claimed in claim 5 or 6, **characterized in that** a correction variable (218) is used to modify the input variable (225) for a regulator (204, 205, 206).

8. The method as claimed in one of the preceding claims, **characterized in that** at least one correction variable (219) is assigned to the calorific value parameter (228) or is assigned according to a predetermined rule which is used to modify at least the regulator amplification of at least one regulator (204, 205, 206) which is used to adjust or control the at least one operating parameter.

9. The method as claimed in one of the preceding claims, **characterized in that** for controlling the operating parameters refuse metering, residence time on a grate, quantitative supply of primary air and primary air preheating, setting values (227) which are derived from at least the measured variables oxygen content in the flue gas (224) and quantity of steam generated (222) and are modified as a function of the calorific value parameter (228) are used.

10. A regulating system for regulating at least one of the operating parameters of a refuse incineration plant, having at least one regulator (203, 204, 205, 206) for regulating at least one of the actuators ram (209), grate (210), primary air flaps (211) or primary air quantity preheater (208), **characterized by** a measuring device (107, 108, 217) for recording a measured variable, from which a calorific value parameter (228), which is a measure of the calorific value of the refuse or the change in this value, is derived, and a calorific value correction unit (215) which, on the basis of the calorific value parameter (228), generates at least one correction variable (218, 219, 220, 221), which is used to modify at least one input variable (225) and/or an output variable (227) and/or a regulator amplification of the at least one regulator (203, 204, 205, 206).

11. The regulating system as claimed in claim 10, **characterized in that** the measuring device (107, 108, 217) records the moisture content of the flue gas (102) or the temperature of the water-saturated flue gas (104).

12. The regulating system as claimed in claim 10 or 11, **characterized in that** the calorific value correction unit (215) has a circuit which is used to assign a plurality of correction variables (218, 219, 220, 221) to the calorific value parameter (228), preferably a processor which is used to calculate the correction variables (218, 219, 220, 221) from the calorific value parameter (228).

13. The regulating system as claimed in one of claims 10 to 12, **characterized in that** measuring devices for measuring the quantity of steam and the oxygen content (202; 201) of the flue gas are present.

14. The regulating system as claimed in claim 13, **characterized by** a multiloop regulating device having a main regulator (203), to which a main regulating variable derived from the measured quantity of steam (222) is fed, and at least three quicker auxiliary regulators (204, 205, 206) which are connected downstream of the main regulator (203), which are fed an auxiliary regulating variable derived from the measured oxygen content (224) and the outputs of which are in each case connected to one of the actuators (209, 210, 211), the correction variables (218, 219, 220, 221) being used to modify an input variable and/or an output variable and/or a regulator amplification of at least one of the auxiliary regulators (204, 205, 206), preferably of all the auxiliary regulators (204, 205, 206).

15. A refuse incineration plant having a combustion chamber, which has a grate, a boiler and having the regulating system as claimed in one of claims 10 to 14.

16. The refuse incineration plant as claimed in claim 15, having a water injection means (103) for saturating the flue gas generated during the refuse incineration with steam, and having a measuring device (108) for measuring the temperature of the steam-saturated flue gas (105), which is arranged downstream of the water injection means (108).

17. The refuse incineration plant as claimed in claim 15, having a measuring device for measuring the moisture content of the flue gas.

## Revendications

1. Procédé pour faire fonctionner un équipement d'incinération des ordures avec lequel, après l'amorçage du feu, la production de chaleur est homogénéisée en régulant d'une pluralité de paramètres de fonctionnement, parmi lesquels au moins un paramètre de fonctionnement est le dosage des ordures, le temps de séjour sur une grille et le quantité d'air primaire acheminé, en fonction de plusieurs grandeurs mesurées, parmi lesquelles au moins une des grandeurs mesurées est la teneur en oxygène dans le gaz de fumée (224) et quantité de vapeur produite (222), **caractérisé en ce qu'**à partir d'une autre grandeur mesurée est généré un paramètre valeur calorifique (228) qui est une indication de la valeur calorifique des ordures ou de sa modification, et au moins l'un des paramètres de fonctionnement est également réglé en fonction du paramètre valeur calorifique (228).

2. Procédé selon la revendication 1, **caractérisé en ce qu'**au moins deux, de préférence tous les paramètres de fonctionnement suivants sont réglés en fonction du paramètre valeur calorifique (228) : somme de l'air primaire et de l'air secondaire, rapport entre l'air primaire et l'air secondaire, position des clapets de zone, quantité d'air primaire, dosage des ordures, temps de séjour sur la grille, valeur de consigne de l'oxygène, préchauffage de l'air primaire.

3. Procédé selon la revendication 1 ou 2, **caractérisé en ce que** le paramètre valeur calorifique (228) est déterminé à partir de l'humidité du gaz de fumée (102) produit lors de l'incinération.

4. Procédé selon la revendication 1, 2 ou 3, **caractérisé en ce que** le paramètre valeur calorifique (228) est déterminé à partir de la température du gaz de fumée (104) produit lors de l'incinération et ensuite saturé en vapeur d'eau.

5. Procédé selon l'une des revendications précédentes, **caractérisé en ce qu'**au moins une grandeur de correction (218, 219, 220, 221) est associée au paramètre valeur calorifique (228) ou associée d'après une règle prédéfinie avec laquelle est modifiée au moins une grandeur d'entrée (225) et/ou au moins une grandeur de sortie (227) d'au moins un régulateur (204, 205, 206) avec lequel au moins un paramètre de fonctionnement est réglé ou régulé.

6. Procédé selon la revendication 5, **caractérisé en ce que** la somme des grandeurs de sortie d'un régulateur (204, 205, 206) sert à régler un paramètre de fonctionnement sur la base de la grandeur de correction (219) générée du paramètre valeur calorifique (228) et de préférence une valeur de réglage de base prédéfinie (226).

7. Procédé selon la revendication 5 ou 6, **caractérisé en ce que** la grandeur d'entrée (225) d'un régulateur (204, 205, 206) est modifiée avec une grandeur de correction (218).

8. Procédé selon l'une des revendications précédentes, **caractérisé en ce qu'**au moins une grandeur de correction (219) est associée au paramètre valeur calorifique (228) ou sera associée d'après une règle prédéfinie avec laquelle est modifiée au moins l'amplification de régulation d'au moins un régulateur (204, 205, 206) avec lequel au moins un paramètre de fonctionnement est réglé ou régulé.

9. Procédé selon l'une des revendications précédentes, **caractérisé en ce que** pour réguler les paramètres de fonctionnement dosage des ordures, temps de séjour sur la grille, quantité d'air primaire acheminé et préchauffage de l'air primaire, on utilise des valeurs de réglage (227) qui sont au moins dérivées des grandeurs mesurées teneur en oxygène dans le gaz de fumée (224) et quantité de vapeur produite (222) et qui sont modifiées en fonction du paramètre valeur calorifique (228).

10. Système de régulation pour réguler au moins l'un des paramètres de fonctionnement d'un équipement d'incinération des ordures avec au moins un régulateur (203, 204, 205, 206) destiné à réguler au moins l'un des éléments de commande poussoir (209), grille (210), clapets d'air primaire (211) ou préchauffeur d'air primaire (208), **caractérisé par** un dispositif de mesure (107, 108, 217) pour acquérir une grandeur mesurée de laquelle est dérivé un paramètre valeur calorifique (228) qui est une indication de la valeur calorifique des ordures ou de sa modification, et par une unité de correction de la valeur calorifique (215) qui, au moyen du paramètre valeur calorifique (228), génère au moins une grandeur de correction (218, 219, 220, 221) avec laquelle est modifiée au moins une grandeur d'entrée (225) et/ou une grandeur de sortie (227) et/ou une amplification de régulation de l'au moins un régulateur (203, 204, 205, 206).

11. Système de régulation selon la revendication 10, **caractérisé en ce que** le dispositif de mesure (107, 108, 217) mesure l'humidité du gaz de fumée (102) ou la température du gaz de fumée saturé en eau (104).

12. Système de régulation selon la revendication 10 ou 11, **caractérisé en ce que** l'unité de correction de la valeur calorifique (215) présente un circuit avec lequel plusieurs grandeurs de correction (218, 219, 220, 221) sont associées au paramètre valeur calorifique (228), de préférence un processeur avec lequel les grandeurs de correction (218, 219, 220, 221) sont calculées à partir du paramètre valeur calorifique (228).

13. Système de régulation selon l'une des revendications 10 à 12, **caractérisé en ce qu'**il existe des dispositifs de mesure de la quantité de vapeur et de la teneur en oxygène (202 ; 201) du gaz de fumée.

14. Système de régulation selon la revendication 13, **caractérisé par** un dispositif de régulation à plusieurs boucles comprenant un régulateur principal (203) auquel est acheminée une grandeur de régulation principale dérivée de la quantité de vapeur mesurée (222) et au moins trois régulateurs auxiliaires (204, 205, 206) plus vites branchés en aval du régulateur principal (203) auxquels est acheminée une grandeur de régulation auxiliaire dérivée de la teneur en oxygène mesurée (224) et dont les sorties sont respectivement reliées avec l'un des éléments de commande (209, 210, 211), une grandeur d'entrée et/ou un grandeur de sortie et/ou une amplification de régulation d'au moins l'un des régulateurs auxiliaires (204, 205, 206), de préférence de tous les régulateurs auxiliaires (204, 205, 206), étant modifiée avec les grandeurs de correction (218, 219, 220, 221).

15. Équipement d'incinération des ordures comprenant un foyer présentant une grille, une cuve et doté d'un système de régulation selon l'une des revendications 10 à 14.

16. Équipement d'incinération des ordures selon la revendication 15, comprenant un dispositif d'injection d'eau (103) pour saturer en vapeur d'eau le gaz de fumée produit lors de l'incinération des ordures et comprenant un dispositif de mesure (108) de la température du gaz de fumée (105) saturé en vapeur d'eau qui est disposé après le dispositif d'injection d'eau (108).

17. Équipement d'incinération des ordures selon la revendication 15, comprenant un dispositif de mesure de l'humidité du gaz de fumée.
